(19) **Europäisches Patentamt**

**European Patent Office**

**Office européen des brevets**

(11) **EP 0 762 695 B1**

(12) **EUROPÄISCHE PATENTSCHRIFT**

(45) Veröffentlichungstag und Bekanntmachung des Hinweises auf die Patenterteilung:
**06.10.2004 Patentblatt 2004/41**

(51) Int Cl.⁷: **H04L 12/56**, H04Q 11/04

(21) Anmeldenummer: **96202234.9**

(22) Anmeldetag: **08.08.1996**

(54) **Verfahren und Vorrichtung zur Konformitätsüberprüfung einer Verkehrsüberwachungsanlage**

Method and device for checking the operation of a policing device

Méthode et dispositif pour la vérification du fonctionnement d'un dispositif de surveillance

(84) Benannte Vertragsstaaten:
**AT CH DE ES FR GB IT LI SE**

(30) Priorität: **18.08.1995 CH 236695**

(43) Veröffentlichungstag der Anmeldung:
**12.03.1997 Patentblatt 1997/11**

(73) Patentinhaber: **ALCATEL**
**75008 Paris (FR)**

(72) Erfinder:
• **Grünenfelder, Reto, Dr.**
**8305 Dietlikon (CH)**

• **Stock, Thomas, Dr.**
**8003 Zürich (CH)**

(74) Vertreter: **Schätzle, Albin, Dipl.-Phys.**
**Alcatel**
**Intellectual Property Department, Stuttgart**
**70430 Stuttgart (DE)**

(56) Entgegenhaltungen:
**WO-A-93/11622        US-A- 5 465 348**

• **PATENT ABSTRACTS OF JAPAN vol. 017, no. 620 (E-1460), 16. November 1993 (1993-11-16) & JP 05 191433 A (FUJITSU LTD;OTHERS: 02), 30. Juli 1993 (1993-07-30)**

EP 0 762 695 B1

**Beschreibung**

Die Erfindung liegt auf dem Gebiet der Datenflusssteuerung an Schnittstellen von Uebertragungseinrichtungen, namentlich in Netzen mit Breitbanddatenübermittlung, und betrifft ein Verfahren nach dem Oberbegriff des Patentanspruchs 1 und eine Anordnung nach dem Oberbegriff des Patentanspruchs 9.

Ein solches Verfahren ist auch als Vorveröffentlichung beschrieben in "PATENT ABSTRACTS OF JAPAN, vol. 017, no. 620 (E-1460), 16. November 1993 (1993-11-16)" und als Nachveröffentlichung in dem darauf basierenden US-Patent US 5,465,348 (AMEMIYA SHIGEO ET AL).

Bei der Uebertragung von Informationen irgendwelcher Art mittels digitaler Dateneinheiten in einem Netz sind Uebertragungsmedien und Dateneinheiten aufeinander angepasst definiert oder gar normiert. Ein Beispiel dafür ist das asynchrone Uebermittlungsverfahren (ATM - Asynchronous Transfer Mode) mit der ATM-Zelle als grundlegender Dateneinheit. Auf dieses wird im folgenden zur Erläuterung konkret Bezug genommen; die damit illustrierten grundsätzlichen Ueberlegungen haben sinngemäss auch für andere Uebertragungseinrichtungen Gültigkeit.

Das Uebertragungsmedium (ATM) ist so konzipiert, dass die Informationen mehrerer Quellen gleichzeitig dieselbe physische Uebertragungsvorrichtung benützen können. Um eine gute Ausnützung zu erreichen bzw. um Verstopfungen zu verhindern, werden mit den Benützern Vereinbarungen über die Sendemodalitäten getroffen. Soll die Einhaltung der Vereinbarung auf Seite der Uebertragungsvorrichtung überprüft und nötigenfalls sichergestellt werden können, bedingt dies eine Parameterüberwachung an einer Schnittstelle, sei dies an einer Benützer- oder einer Netz-Schnittstelle. Eine derartige Verkehrsüberwachung und -steuerung durch das Netz wird in der technischen Literatur mit dem englischen Begriff "Usage/Network Parameter Control" (UPC/NPC) bezeichnet. Auf eine Verletzung der Vereinbarung antwortet die Parameterüberwachung durch eine Diskriminierung der nicht konformen Dateneinheit, üblicherweise ein Verwerfen oder ein Markieren zwecks späterer Sonderbehandlung, zum Beispiel späterem Ausscheiden.

Eine Vereinbarung wird in der Phase des Verbindungsaufbaus pro virtueller Verbindung ausgehandelt oder in einer späteren Phase erneut ausgehandelt (sog. Connection Admission Control, CAC). Dabei werden die einzuhaltenden Parameter festgelegt. Wohl der wichtigste Parameter ist dabei die Anzahl der pro Zeiteinheit übertragbaren Dateneinheiten, die sogenannte Zellenrate, beziehungsweise deren Kehrwert, der Zellenabstand, auch Zwischenankunftszeit genannt. Es werden verschiedene Arten von Zellenraten definiert: maximale, tragbare (als obere Schranke für eine mittlere) usw. In der Fachsprache werden dafür meist die englischsprachigen Ausdrücke verwendet: "peak cell rate", "sustained cell rate", "Mean cell rate". Weitere Parameter sind etwa Zellverzögerungsschwankung "cell delay variation", CDV, Stossnachgiebigkeit "burst tolerance", usw., wobei gewisse Abhängigkeiten voneinander bestehen können. Theoretisch kann die Vereinbarung zwischen Netzbetreiber und Benützer beliebige Parameter betreffen. Die einschlägigen ITU-Empfehlungen auf dem derzeitigen Stand lassen noch viele Möglichkeiten offen. Definiert ist zur Zeit nur ein einziger allgemeiner Algorithmus zur Diskriminierung von Datenzellen einer virtuellen Verbindung in einem Zellenstrom, die nicht den vereinbarten Parametern über das zeitliche Eintreffen solcher Datenzellen entsprechen. Er berücksichtigt zwei Vertragsparameter, die Spitzenzellenrate "Peak Cell Rate" bzw. deren Kehrwert, das "Increment I", und die Zellenverzögerungsschwankung "Cell Delay Variation CDV" bzw. die "Limit L". Er wird "Generic Cell Rate Monitoring Algorithm", GCRA, genannt und in zwei Ausführungsformen, als "Virtual Scheduling Algorithm" und als "Continuous-State Leaky Bucket Algorithm" illustriert.

Dieser GCRA "Generic Cell Rate Monitoring Algorithm", basierend auf dem Inkrement I und dem Grenzwert L, wird heute in der Praxis üblicherweise angewendet, um eine UPC/NPC zu realisieren. Diese muss einen Zellenstrom auf dessen Konformität, das heisst die Einhaltung des Vertrags (GCRA,I,L), prüfen können. Der eingehende Verkehr wird als (GCRA,I,L)-konform (vertragskonform) betrachtet, falls in der zugehörigen UPC/NPC keine Zellen verworfen oder markiert werden. Gehen zu viele Zellen einer Verbindung verloren, so stellt sich die Frage, ob dies auf eine (GCRA,I,L)-Verletzung des Kunden, auf eine Fehlfunktion des implementierten GCRA oder auf mangelnde Resourcen im Netz zurückzuführen ist. Aus legalen Gründen ist es in einem solchen Fall wichtig, Instrumente zu haben, womit eindeutig bestimmt werden kann, wer für die Verschlechterung der Dienstgüte veranwortlich ist. Es besteht also der Bedarf, das Funktionieren der Verkehrsüberwachung und -steuerung während des laufenden Betriebs ("in service, online")- also ohne spezielle Testverbindung - überprüfen zu können.

Eine derartige Ueberprüfung ist nicht ohne weiteres möglich. Der Name "Continuous-State Leaky Bucket Algorithm" illustriert das Problem treffend. Er stammt von der Analogie des Eimers, der ständig und mit wechselndem Zustrom mit Flüssigkeit gefüllt wird, die nach Massgabe der Grösse des Lecks ständig ausläuft, solange sich noch welche im Eimer befindet. Der GCRA hat also die Eigenschaft, so lange ein 'Gedächtnis' für Ereignisse zu haben, die zeitlich weit zurückliegen können, bis der 'lecke Eimer' einmal ganz entleert ist. Der Zeitpunkt des Eintreffens einer Zelle, welche den GCRA in diesen Zustand überführt, wird Regenerationspunkt genannt; im folgenden wird der Zustand selber als Regenerationszustand bezeichnet. Der Momentanzustand des GCRA in einer UPC oder NPC ist nicht greifbar, und selbst wenn die Regenerationspunkte ermittelbar gemacht würden, wäre es für eine Konformitätsüberprüfung im Betrieb kaum zumutbar, einen solchen abwarten zu müssen - es könnte sein, dass vor Beendigung der Verbindung keiner mehr auftritt.

Es besteht daher die Aufgabe ein Instrumentarium anzugeben, mit dessen Hilfe sich im Betrieb an einem Netzelement in einem bestimmbaren Zeitpunkt und unabhängig von der Implementation ein "Generic Cell Rate Algorithm" daraufhin überprüfen lässt, ob er die korrekten Entscheidungen darüber trifft, ob eine Zelle in einem Zellenstrom mit den getroffenen Vereinbarungen konform ist, das heisst (GCRA,I,L) einhält.

Die Aufgabe wird durch ein Verfahren mit den Merkmalen des Patentanspruchs 1 und eine Vorrichtung mit den Merkmalen des Patentanspruchs 9 gelöst.

Die Lösung sieht vor, den Zellenstrom gleichzeitig einem zweiten GCRA zuzuführen. Die beiden Algorithmen werden aufeinander synchronisiert. Von diesem Zeitpunkt an werden die Ergebnisse beider GCRA beobachtet und die Konformität auf Grund eines Vergleichs der Ergebnisse bejaht oder verneint.

Das Synchronisieren geschieht in einem Zeitpunkt, in dem sich beide GCRA in einem Regenerationszustand befinden. In einer bevorzugten Ausgestaltung des Verfahrens wird dieser Zustand künstlich herbeigeführt, indem für die zu überprüfende Verbindung - ohne Wissen des Benutzers - einer der vereinbarten Parameter kurzfristig anders festgelegt wird, so dass keine Verletzung des Vertrags mehr möglich ist. Der erste GCRA erreicht damit früher oder später zwangsläufig einen Regenerationszustand und in der Folge ist die Ankunftszeit jeder Zelle dieser Verbindung ein Regenerationspunkt. Der zweite GCRA lässt sich durch Vorgabe der Anfangsbedingung direkt aus einem Regenerationszustand starten.

Damit eine Synchronisation nach möglichst kurzer Zeit erfolgen kann, wird das Erreichen eines Regenerationszustands durch eine obere Schranke abgeschätzt. Der zu überprüfende GCRA lässt sich als Folge {y} von Ankunftszeitdifferenzen darstellen. Diese Folge ist ohne Kenntnis der Anfangsbedingungen nicht nachvollziehbar. Es lässt sich jedoch durch einen Start mit extremen Anfangsbedingungen und Verwendung entsprechender Parameter eine dazu majorante Folge {d} bilden. In einem Regenerationspunkt dieser majoranten Folge {d} befindet sich der zu überprüfende GCRA mit Sicherheit im Regenerationszustand. Mit Erreichen dieses Zustands kann der veränderte Parameter auf seinen nominellen Werte zurückgesetzt und gleichzeitig der zweite GCRA mit den nominellen Parametern aus dem Regenerationszustand heraus gestartet werden. Die beiden GCRA sind damit synchronisiert.

Bevorzugt wird die majorante Folge {d} zum Zeitpunkt des Veränderns des Parameters gestartet oder kurz danach. Die Parameter zur Bildung der majoranten Folge {d} müssen natürlich entsprechend angepasst sein. Mit Vorteil wird dabei der veränderte Parameter leicht unterschiedlich festlegt, und zwar so, dass die majorante Folge {d} etwas langsamer dem Regenerationspunkt zustrebt als theoretisch möglich wäre. Diese Massnahme erlaubt es, auch bei Ausschöpfung der zulässigen Toleranzen bei der Implementierung der Algorithmen zu gewährleisten, dass die majorante Folge {d} tatsächlich majorant bleibt.

Eine Vorrichtung zur Durchführung des Verfahrens ist in der Nähe des Eingangs zum Netzelement angeordnet. Der Zellenstrom wird in der Zuleitung zum ersten GCRA in einem Verzweiger dupliziert. Vor der Verzweigung liegt eine Zellen-Einfügeschaltung. An mindestens einem Ausgang des Netzelements ist der Zellenstrom ebenfalls für Testzwecke zugänglich. Diese Anordnung kann Teil des Netzelements sein, in dem der zu überprüfende GCRA implementiert ist, anderenfalls ist sie als Erweiterung der erfinderischen Vorrichtung vorzusehen. Letztere besteht aus einer Implementierung eines zweiten GCRA, einer dazugehörigen Schaltung zur Synchronisierung der GCRA samt einer Rückleitung zur Einfügeschaltung und einem Konformitätsentscheider, der Zellenströme aus der genannten Implementierung, der dazugehörigen Schaltung und dem mindestens einen Ausgang verarbeitet. Die Anordnung der Implementierung des zweiten GCRA samt der Schaltung zur Synchronisierung der beiden GCRA gegenüber der Verzweigung ist dabei von Belang. Der Unterschied der Laufzeiten der Zellen von der Verzweuing zur Implementierung des ersten, zu überprüfenden GCRA bzw. des zweiten GCRA darf nicht grösser sein als die Zeit, die eine Zelle für das Passieren einer festen Stelle auf der Leitung benötigt. Die Schaltung zur Synchronisierung der GCRA bildet die Folge {d} und schickt über die Rückleitung spezielle Zellen an die GCRA, mit deren Hilfe die Parameter gesetzt bzw. zurückgesetzt werden.

In einer bevorzugten Ausführungsform enthält der Konformitätsentscheider eine Auswerteschaltung für F4-Flow OAM-Zellen, was das Feststellen der Zahl zwischen der Einfügestelle der F4-Zellen und dem Ausgang des Netzelements verloren gegangener Zellen erlaubt. Diese Ergänzung ist hinfällig, wenn der Zellenstrom unmittelbart am Ausgang der Implementierung des zu überprüfenden GCRA greifbar ist, was in den seltensten Fällen zutrifft.

Die Erfindung wird anhand der nachfolgenden Beschreibung in Zusammenhang mit den Figuren eingehender erläutert. Es zeigen:

Figur 1: Das Eintreffen von Zellen auf der Zeitachse und die für den Algorithmus massgebenden zeitlichen Relationen

Figur 2: Die schematische Anordnung zur Konformitätsüberprüfung eines GCRA.

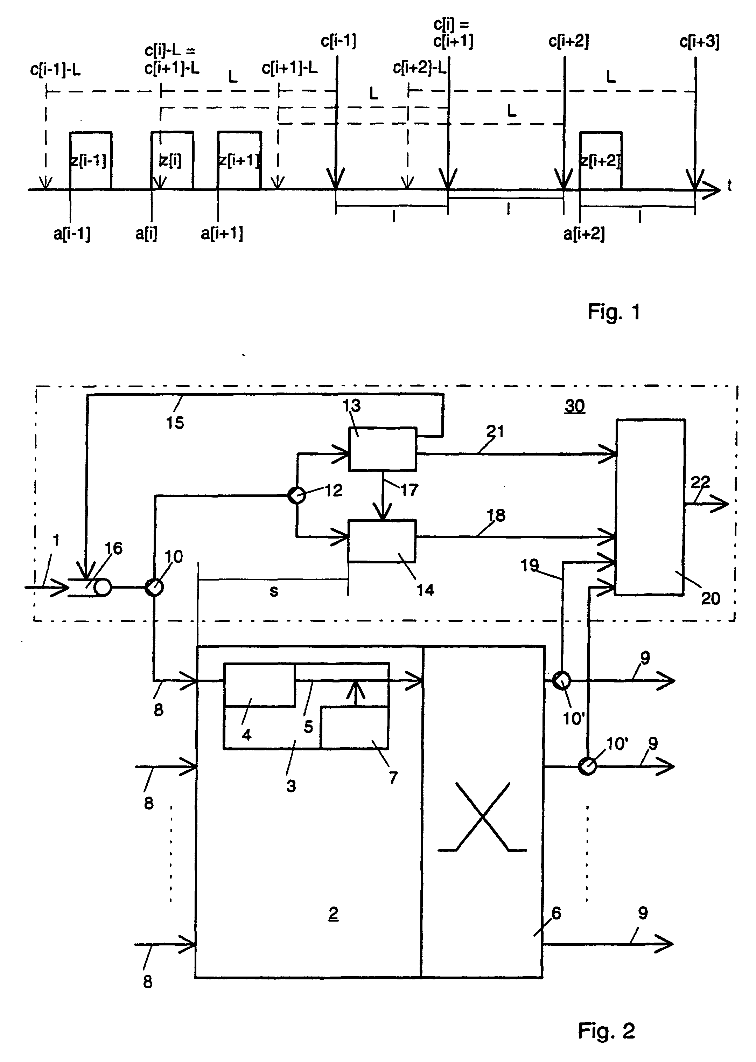

In der Figur 1 sind über die Zeitachse t symbolisch die zu einer zu überwachenden virtuellen Verbindung gehörenden Zellen $z[i]$ mit ihren tatsächlichen Ankunftszeiten ("actual arrival time") $a[i]$ aufgetragen. Der Index i dient hier lediglich der Individualisierung der dargestellten Objekte und ist keine zu verarbeitende Grösse. Er wird mit jeder eintreffenden Zelle der betrachteten virtuellen Verbindung um 1 erhöht. Der "Generic Cell Rate Monitoring Algorithm", GCRA, datiert mit jeder eintreffenden Zelle $z_i$ eine interne Grösse auf, die erwartete Ankunftszeit ("expected arrival time") $c_{i+1}$ der nächsten Zelle $z_{i+1}$. Bei Eintreffen einer Zelle, in der Figur 1 zum Beispiel die Zelle $z_{i-1}$, stellt er fest, ob deren tatsächliche Ankunftszeit $a_{i-1}$ nach der erwarteten Ankunftszeit $c_{i-1}$ liegt. Ist dies, wie gezeichnet, nicht der Fall, stellt er fest, ob die tatsächliche Ankunftszeit $a_{i-1}$ gar vor einer zulässigen Ankunftszeit liegt, das ist die erwartete Ankunftszeit $c_{i-1}$ vermindert um den Grenzwert L, also der Zeitpunkt $c_{i-1}$-L. Ist dies, wie gezeichnet, nicht der Fall, so entscheidet der GCRA auf eine konforme Zelle und verschiebt die nächste erwartete Ankunftszeit $c_i$ um das Inkrement I. In der Figur 1 liegt nun die tatsächliche Ankunftszeit $a_i$ der nächsten Zelle $z_i$ vor der zulässigen Ankunftszeit $c_i$-L. Der GCRA entscheidet auf eine nicht konforme Zelle und nimmt keine interne Aufdatierung vor, das heisst, $c_{i+1}$ ist gleich $c_i$. Die nächste ankommende Zelle $z_{i+1}$ muss daher, um konform zu sein, nach wie vor später als zur zulässigen Ankunftszeit $c_{i+1}$-L = $c_i$-L eintreffen. In der Figur 1 liegt die tatsächliche Ankunftszeit $a_{i+1}$ nach dieser Grenze, aber vor der erwarteten Ankunftszeit $c_{i+1}$ = $c_i$. Der GCRA verschiebt daher erneut die nächste erwartete Ankunftszeit $c_{i+2}$ um das Inkrement I. Die nächste Zelle $z_{i+2}$ mit der tatsächlichen Ankunftszeit $a_{i+2}$ trifft im gezeichneten Beispiel erst nach der erwarteten Ankunftszeit $c_{i+2}$ ein. Der GCRA verschiebt die nächste erwartete Ankunftszeit $c_{i+3}$ ausgehend von $a_{i+2}$ - und nicht etwa $c_{i+2}$ - um das Inkrement I. Bei der tatsächlichen Ankunftszeit $a_{i+2}$ der Zelle $z_{i+2}$ handelt es sich um einen Regenerationspunkt. Mathematisch ausgedrückt nimmt der GCRA mit der Ankunft jeder Zelle, die zur zu überprüfenden virtuellen Verbindung gehört, folgende Aufdatierung und Entscheidungen vor:

$$c_{i+1} = \begin{cases} a_i + I, & a_i > c_i & \text{konform, Regeneration} \\ c_i + I, & c_i \geq a_i \geq c_i\text{-L} & \text{konform} \\ c_i, & a_i < c_i\text{-L} & \text{nicht konform, Diskr.} \end{cases}$$
$$c_0 = a_0 = 0 \qquad \text{Anfangsbedingung}$$

Das korrekte Funktionieren eines auf einen Zellenstrom angesetzten GCRA liesse sich durch Vorgabe eines bekannten Zellenstroms und Auswertung der getroffenen Entscheidungen bewerkstelligen. Hierzu müsste aber die virtuelle Verbindung für Testzwecke zur Verfügung stehen und das Ergebnis des GCRA direkt zugänglich sein. Ersteres ist im Betrieb (on-line) nicht möglich, letzteres bedingt einen apparativen Zugang zum Ausgang des UPC/NPC, in welchem der GCRA implementiert ist, was nicht ohne Eingriff in das Testobjekt realisierbar ist. Sollen die Entscheidungen eines GCRA im Betrieb (on-line) überprüft werden, also während der GCRA einen unbekannten Zellenstrom bearbeitet, muss ein Test auf diesen Zellenstrom abstellen können. Unter dieser Voraussetzung ist es möglich, den durch den GCRA bearbeiteten Zellenstrom gleichzeitig zu untersuchen und die erforderlichen Entscheidungen zu ermitteln. Erfindungsgemäss geschieht dies durch einen zweiten, gleichgearteten GCRA, der auf den ersten synchronisiert wird. Die Wirkung des ersten GCRA kann aber in der Regel nur am Ausgang des Netzelements, an dessen Eingang sich die Verkehrsüberwachung befindet, festgestellt werden. Die Erfindung sieht daher vor, die Entscheidung darüber, ob der erste GCRA konform arbeitet, durch einen Vergleich der Ergebnisse zu fällen, wobei der zweite GCRA die Schranke festlegt.

Beim Ueberprüfen eines ersten GCRA durch einen gleichgearteten zweiten GCRA sind namentlich zwei Probleme zu beachten. Zum einen werden zwei verschiedene Implementationen eines GCRA auf Grund verschiedener Rechengenauigkeiten, Darstellung der Parameter I und L oder ähnlichem verschiedene Entscheidungen treffen. Zum anderen besteht beim Vergleich zweier GCRA das sogenannte Phasenproblem: werden zwei identische GCRA mit demselben Zellenstrom versehen, aber zu verschiedenen Zeitpunkten gestartet, so liefern sie in der Regel verschiedene Entscheidungen.

Dem ersten Problem ist durch eine Vereinbarung beizukommen, wie sie aus den Empfehlungen oder Normen abgeleitet werden kann: Eine UPC/NPC mit einem Vertrag (GCRA*,I*,L*) ist konform zu (GCRA,I,L), sofern (GCRA*, I*,L*) in einem Beobachtungszeitraum mindestens soviele Zellen als der Vereinbarung entsprechend betrachtet, wie (GCRA,I,L), wobei I*=I+R mit R>0 ist. Die Toleranz R ist sehr klein und noch festzulegen. Dies ist eine schwächere Bedingung als die Uebereinstimmung der Entscheidungen.

Wird ein zweiter GCRA für Zellen einer gleichen Verbindung gestartet, für die bereits ein konformer erster GCRA in Betrieb ist, so ergeben sich nur dann gleiche Ergebnisse, wenn der Anfangszustand des zweiten mit dem Momentanzustand des ersten übereinstimmt, was praktisch nur für den Zustand des 'leeren Eimers' machbar ist. Für einen Konformitätstest eines GCRA durch einen zweiten GCRA soll also dieser aus einem Regenerationszustand heraus gestartet werden können, wenn sich jener in einem Regenerationszustand befindet. Nach einer bevorzugten Form des erfinderischen Verfahrens wird deshalb synchronisiert, wenn sich beide GCRA in einem Regenerationszustand befinden.

Wird die weiter oben erläuterte mathematische Formulierung des GCRA statt durch die theoretische Ankunftszeit c[k] und die tatsächliche Ankunftszeit a[k] durch deren Differenz y[k] = c[k]-a[k] und die Zwischenankunftszeit i[k+1] = a[k+1]-a[k] ausgedrückt, so ergibt sich daraus die Formel für die Folge {y[k]} für k≥0 wie folgt:

$$
y[k+1] = \begin{cases} I - i[k+1], & y[k] < 0 \\ y[k] + I - i[k+1], & 0 \le y[k] \le L \\ y[k] - i[k+1], & y[k] > L \end{cases}
$$
$$
y[0] = 0, \quad i[1] > 0 \quad \text{Anfangsbed.}
$$

y[k] wird als "one-point cell delay variation" bezeichnet. y kann nie grösser werden als I+L. Wird für den nämlichen Zellenstrom in einem beliebigen Zeitpunkt k=q≥0 mit einem gleichwertigen Algorithmus eine Folge {d[n+q]} für n≥0 mit einem definierten Startwert I+L gestartet, so lautet die mathematische Darstellung:

$$
d[n+q+1] = \begin{cases} I - i[n+q+1], & d[n+q] < 0 \\ d[n+q] + I - i[n+q+1], & 0 \le d[n+q] \le L \\ d[n+q] - i[n+q+1], & d[n+q] > L \end{cases}
$$
$$
d[q] = I + L, \quad i[q+1] = 0
$$

Da beim Start die tatsächliche Zwischenankunftszeit i[q+1] nicht bekannt ist, wird der theoretisch unmögliche Wert null eingesetzt, der sicher kleiner ist als der tatsächliche Wert. Die Folge {d[n+q]} mit n≥0 ist für alle q≥0 eine Majorante der Folge {y[n+q]}. Das heisst, der Zeitpunkt a[n+q], in dem d[n+q]≤0 ist, ist ein Regenerationspunkt des untersuchten Zellenstroms, denn es gilt dann auch y[n+q]≤0. Die Folge {d[n+q]} und damit deren Nulldurchgang lässt sich ermitteln, ganz im Gegenteil zu jenem von {y[n+q]}. Somit ist es möglich, die Synchronisation im Regenerationszustand herbeizuführen.

Das gelegentliche Auftreten von Regenerationspunkten ist zwar wahrscheinlich, aber nicht zwingend; ein gleichmässiger Zellenstrom mit der vereinbarten Spitzenzellenrate hat beispielsweise keinen Regenerationspunkt. Auch ist die Detektion eines solchen nicht trivial. Um einen on-line Test zu fast beliebigem Zeitpunkt starten zu können, also nicht einen Regenerationspunkt abwarten zu müssen, ist in einer weiteren Ausgestaltung des erfinderischen Verfahrens vorgesehen, den Regenerationspunkt zu erzwingen. In jeder UPC/NPC sind für zu kontrollierende Verbindungen GCRA implementiert. Beim Verbindungsaufbau werden die Wertepaare I,L vereinbart und in einen Speicher geschrieben. Bei Ankunft einer Zelle der entsprechenden Verbindung wird auf diese Speicherinhalte zugegriffen. Zum Erzwingen des Regenerationspunkts wird der Speicherinhalt vorübergehend verändert, konkret das Inkrement I durch ein Ersatzinkrement I' ersetzt. Wenn nach einiger Zeit das neue Inkrement I' seine Wirkung entfaltet hat, wird der Speicherinhalt wieder mit I beschrieben. Was dadurch bewirkt wird, ist weiter unten beschrieben. Zunächst sei noch erläutert, wie die Aenderung des Inkrements bewerkstelligt werden kann.

I' wird mittels einer Spezialzelle zum UPC/NPC transportiert, wo sie sofort als solche erkannt und daraufhin im Speicher I durch I' ersetzt wird. Anschliessend wird diese Zelle vernichtet und ist für den GCRA nicht existent. Damit derartigen Zellen Missbrauch betrieben werden könnte, sollen sie nur vom Netzbetreiber generiert und vom ersten GCRA, den sie durchlaufen, vernichtet werden. Die Realisierung der Spezialzelle kann beispielsweise mit Hilfe einer Betriebsund Unterhaltszelle, einer sogenannten "operation and maintenace cell", OAM-Zelle, geschehen; eine andere Möglichkeit wäre, eine sogenannte "resource management cell", RM-Zelle, zu verwenden. OAM-Zellen werden von den Benützern und Netzbetreibern sporadisch in den Zellenstrom eingefügt und sind deshalb keine zusätzliche Belastung. Die OAM-Zelle wird durch ihre Codierung zur Spezialzelle, die zum Beispiel wie folgt sein könnte: Im "function specific field" (oder an einer anderen geeigneten Stelle) wird der codierte Wert des Inkrements I' bzw. I und eines geheimen Erkennungscodes eingetragen, auf Grund dessen die Zelle nach Auslesen des Inkrements vernichtet wird. Eine weitere Absicherung für das Vernichten kann durch das Feld "reserved future use" erfolgen, indem für alle OAM-Zellen ein Bit definiert wird, das für die Spezialzelle mit dem entgegengesetzten Wert beschrieben wird.

Das Ersatzinkrement I' wird auf den Wert $\delta$-$\varepsilon$ gesetzt, wobei $\delta$ die Transmissionszeit einer Zelle ist und $\varepsilon$>0 von der Toleranz R abhängt. Mit anderen Worten, I' ist kürzer als der Abstand, in dem sich die Zellen überhaupt folgen können. Der GCRA mit dem Vertrag (GCRA,I',L) geht daher zwingend in einen Regenerationszustand über und verharrt darin. Bei Ankunft der nächsten Zelle der zu überprüfenden virtuellen Verbindung wird die Berechnung der Folge {d} gestartet, wobei an Stelle von I ein Hilfsinkrement I''=δ eingesetzt wird. Da I'' kleiner ist als die mögliche Zwischenankunftszeit, fällt die Folge {d} monoton. Wegen des um ε kleineren Ersatzinkrements ist trotz der zu beachtenden Toleranzen gewährleistet, dass der tatsächliche Regenerationszustand vor dem durch {d} künstlich ermittelten erreicht wird. Nach Erreichen des Regenerationszustands wird im ersten GCRA das Ersatzinkrement I' mittels einer weiteren OAM-Zelle auf das vertragsgemässe Inkrement I zurückgesetzt. Zur tatsächlichen Ankunftszeit a[m] der nächsten ankommenden Zelle der überprüften Verbindung wird die darauf folgende theoretische Ankunftszeit mit c[m+1]=a[m] +I festgelegt. Gleichzeitig wird der zweite GCRA mit c[1]=I gestartet. Damit sind die beiden GCRA innert nützlicher Frist synchronisiert worden und liefern, sofern beide korrekt arbeiten, im Rahmen der Toleranz dieselben Ergebnisse. Bedingung für das korrekte Funktionieren ist, dass der Laufzeitunterschied für die Signale vom Punkt, wo der Zellenstrom in zwei Zweige aufgespaltet wird bis zur Stelle, wo die Zellen je vom GCRA bearbeitet werden, kleiner als δ ist.

Für den eigentlichen Konformitätstest werden nun die Ergebnisse aus den beiden GCRA verglichen. Allerdings dürfte am zu testenden UPC/NPC bzw. dem ersten GCRA in den seltensten Fällen eine Information über die verworfenen Zellen greifbar sein. Meist wird der Ausgang überhaupt nicht direkt zugänglich sein. An einer Vermittlungseinheit zum Beispiel werden in der Regel nur die zu- und abgehenden Verbindungen zur Verfügung sein. Bevorzugt geschieht der Vergleich daher durch zählen von zur Verbindung gehörenden Zellen an zugänglichen Stellen vor und nach den beiden GCRA und einem Vergleich der Zählerstände. Beim zweiten GCRA ist davon auszugehen, dass mindestens die konformen Zellen unmittelbar am Ausgang erfassbar sind. In diesem Sinne kann der eigentliche Konformitätstest beispielsweise wie folgt geschehen: Während eines wählbaren Beobachtungszeitraums werden die zur Verbindung gehörenden ankommenden Zellen laufend gezählt. Es ergibt sich ein Zählerstand A(t). Zellen dieser Verbindung, die gemäss dem ersten GCRA konform sind, werden an der nächstmöglichen Stelle ebenfalls laufend gezählt, was einen Zählerstand C(t) ergibt. Die Differenz D(t)=A(t)-C(t) ist die Zahl der Zellen, die insgesamt untergegangen sind, sei es wegen der Diskriminierung durch den ersten GCRA, sei es aus anderen Gründen. Um grosse Zählerstände zu vermeiden wir mit Vorteil nur diese Differenz effektiv gezählt. Ferner werden die Zellen der untersuchten Verbindung, die gemäss dem zweiten GCRA nicht konform sind, laufend gezählt, oder aus der Differenz der ersten Zählung und einer Zählung von gemäss zweitem GCRA konformen Zellen berechnet, woraus ein Zählerstand B(t) resultiert. Im Idealfall ergibt sich eine Uebereinstimmung der Zählerstände mit B(t)=D(t)=A(t)-C(t) . Vom Benützer aus betrachtet, ist Konformität auch gegeben, wenn B(t) grösser ist als A(t)-C(t), für den Netzbetreiber allerdings ist dies ein Hinweis, dass der erste GCRA mit Sicherheit weniger streng diskriminiert als der zweite. Ist umgekehrt B(t) kleiner als A(t)-C(t), so kann Konformität trotzdem gegeben sein. Der Unterschied könnte von einem zusätzlichen Zellenverlust zwischen den beiden Erfassungsstellen für A(t) und C(t), beispielsweise in der Schaltmatrix der Vermittlungseinheit, herrühren.

Das geschilderte Vorgehen lässt also zwar eine Abschätzung zu, ermöglicht aber noch keine genaueren Angaben. Dem kann durch einen ergänzenden Verfahrensschritt unter Zuhilfenahme einer weiteren OAM-Zelle abgeholfen werden. Für diese sind fünf verschiedene Benutzungsarten, sogenannte "flows", F1 bis F5 definiert. Es wird eine F4-Zelle benutzt, das ist eine netzeigene Zelle, die dem Benützer nicht zugänglich ist. Sie wird unmittelbar nach dem UPC/NPC in den Zellenstrom eingefügt, also innerhalb des Netzelements an einer sonst nicht zugänglichen Stelle - dieser Generator steht für die ITU-Empfehlungen zur Diskussion. Die OAM-Zelle enthält unter anderem die Angabe darüber, wieviele Zellen der entsprechenden Verbindung seit der letzten OAM-Zelle im Zellenstrom enthalten waren. Wird nun der Beginn und das Ende eines Beobachtungszeitraums auf das Eintreffen von F4-Zellen ausgerichtet und deren Information über die Zellenzahl F(t) ausgewertet, so lässt sich feststellen, wieviele Zellen nach dem ersten GCRA noch verloren gegangen sind, nämlich E(t)=F(t)-C(t), wobei F(t) und damit E(t) nicht durch laufende Zählung zu Stande kommen, sondern erst am Ende des Beoabachtungszeitraums angebbar sind. Wird die Zahl E(t) mit berücksichtigt, so ergibt C(t)+E(t) die Zahl der am Ausgang des ersten GCRA weitergegebenen Zellen und A(t)-B(t) die Zahl der vom zweiten GCRA durchgelassenen Zellen. Im Idealfall gilt also A(t)-B(t)=C(t)+E(t) bzw. D(t)=B(t)+E(t) und Abweichungen von dieser Gleichheit lassen unmittelbar auf ein ungleiches Arbeiten der zwei GCRA schliessen. C(t)+E(t) entspricht natürlich der durch die F4-Zelle gemeldeten Zahl F(t) von gesendeten Zellen. Das heisst, allein wegen des Vergleichs könnte auf die Ermittlung von C(t) verzichtet werden. C(t) ist aber dienlich, um die Zahl der nach dem ersten GCRA verlorengegangenen Zellen feststellen zu können. So oder so fällt mindestens einmal ein Zählerstand in der Grössenordnung aller im Beobachtungszeitraum transportierter Zellen an.

Die Figur 2 zeigt schematisch eine mögliche Anordnung für die Konformitätsüberprüfung eines GCRA nach dem vorstehend beschriebenen Verfahren. Ganz links ist eine Leitung 1 angedeutet, auf welcher ein Zellenstrom zu einem Netzelement mit Verkehrssteuerung gleitet wird - in der Figur ist hierfür eine Vermittlungseinheit 2 mit dem Steuerteil 3 angedeutet. Dieser enthält als wesentlichen Bestandteil den UPC/NPC 4 mit pro Verbindung einem ersten GCRA, welcher auf den Zellenstrom einwirkt. Letzterer gelangt über die interne Leitung 5 an die eigentliche Schaltmatrix 6. Von einem OAM-Zellengenerator 7 können F4-Zellen in den Zellenstrom auf der internen Leitung 5 eingeschleust werden. Die Vermittlungseinheit 2 hat eine Vielzahl von Eingängen 8 und Ausgängen 9. In der Eingangsund der Ausgangsleitung, über welche die zu überprüfende Verbindung läuft, ist je eine Verzweigung 10, 10' angebracht, so dass der entsprechende Zellenstrom weiteren Vorrichtungen zugeführt werden kann. Die Vermittlungseinheit 2 könnte auch so gebaut sein, dass derartige Testanschlüsse bereits vorhanden sind.

Der soweit beschriebene Teil der Anordnung ist - vielleicht mit Ausnahme der Verzweigungen 10, 10' - üblicherweise vorhanden und enthält das Testobjekt, den UPC/NPC 4 mit den ersten GCRA. Die Vorrichtung 30 zur Durchführung des Verfahrens zur Konformitätsüberprüfung dieses ersten GCRA umfasst eine Zuleitung 11 mit einer weiteren Verzweigung 12, über welche der Zellenstrom der Schaltung 13 und einer Implementierung des zweiten GCRA 14 zugeleitet wird. Die Länge der Leitung von der Verzweigung 10 bis zur Implementierung des zweiten GCRA 14 unterscheidet sich von jener von der Verzweigung 10 bis zum Testobjekt um die Längendifferenz s. Der durch die Längendifferenz s verursachte Laufzeitunterschied muss im wesentlichen konstant und dem Betrage nach kleiner sein als eine Zellentransmissionszeit. Die Schaltung 13 fügt über eine Rückleitung 15 und ein Einfügeglied 16 OAM-Zellen (beziehungsweise RM-Zellen) in den Zellentrom ein. Das Einfügeglied 16 ist im wesentlichen eine Verzögerungsleitung um eine Zelle; befindet sich eine Leerzelle darin und steht eine Zelle zum Einfügen an, so wird erstere durch zweitere ersetzt. Die eingefügten OAM-Zellen 16 bewirken das Verändern bzw. Zurücksetzen des Inkrements I im ersten GCRA. Die Schaltung 13 bildet die Zwischenankunftszeiten der Zellen der zu überprüfenden Verbindung und berechnet die Folge {d}. Im übrigen wird der Zellenstrom unverändert über eine Durchleitung 21 an einen Konformitätsentscheider 20 geleitet. Ueber eine Befehlsleitung 17, die zur Implementation des zweiten GCRA 14 führt, startet sie den Vergleichsalgorithmus im Regenerationspunkt. Der Zellenstrom am Ausgang des zweiten GCRA gelangt über eine Referenzleitung 18 an den Konformitätsentscheider 20. Der Zellenstrom von der Verzweigung 10' am einen der Ausgänge 9 des Netzelements 2 gelangt über eine Testleitung 19 ebenfalls an den Konformitätsentscheider 20. Dieser setzt und startet je einen Zähler für die auf den drei Leitungen ankommenden Zellen bzw. deren Differenz und nimmt Vergleichsoperationen vor. Der Entscheid ist am Entscheiderausgang 22 greifbar. Die Ausgestaltung eines derartigen Konformitätsentscheiders 20 im Detail, eingeschlossen der Ablaufsteuerung, kann der Fachmann ohne weitere Angaben vornehmen.

Sofern sich der Zellenstrom unmittelbar nach Durchlaufen der Implementation des zu überprüfenden GCRA abgreifen liesse, also eine Verzweigung 10' an der internen Leitung 5 vorhanden wäre (nicht gezeichnet), ergäbe sich durch die eben erwähnten Vergleichsoperationen direkt der Unterschied der Ergebnisse der GCRA. An einem Netzelement wie etwa der gezeichneten Vermittlungseinheit 2 ist dies nicht der Fall. Daher enthält der Konformitätsentscheider in einer erweiterten Variante der Vorrichtung auch eine Auswertung der F4-Zellen. Der Zeitpunkt des Eintreffens der F4-Zellen ist bestimmend für den Beobachtungszeitraum. Der Konformitätsentscheider entnimmt dem Inhalt der F4-Zelle die Anzahl der zwischenzeitlich gesendeten Zellen und berücksichtigt sie als weiteren Zählerstand für seine Entscheidung.

Die Figur 2 zeigt den Anschluss der Vorrichtung 30 an eine einzige Leitung 1 und an zwei der Ausgänge 9. Alle Verbindungen, die je die Eingangs- und eine der Ausgangsleitungen gemeinsam haben, können über diese Vorrichtung überprüft werden. Sind alle Ausgangsleitungen 9 an den Konformitätsentscheider 20 geführt, lässt sich jede beliebige Verbindung des physischen Eingangs überprüfen. Dabei können simultan für die verschiedenen virtuellen Verbindungen unterschiedliche Verträge (GCRA,I,L) mit je anderen Werten für I und L getestet werden. Selbstverständlich ist es möglich die Vorrichtung 30 mit mehreren Anschlüssen für die eingangs- und ausgangsseitigen Leitungen des Netzelements 2 vorzusehen, wodurch gleichzeitig mehr als ein physischer Eingang mit je verschiedenen GCRA überprüft werden können.

Das Verfahren und die Vorrichtung können für Tests am Netzelement sowohl im Betrieb ("in service test") oder unabhängig vom Betrieb ("out of service test", z. B. für Fabrikation, Installation oder Reparatur) benützt werden.

**Patentansprüche**

1.    Verfahren zur Konformitätsüberprüfung eines GCRA genannten Algorithmus zur Diskriminierung von Datenzellen einer virtuellen Verbindung in einem Zellenstrom, die nicht den vereinbarten Parametern über das zeitliche Eintreffen solcher Datenzellen entsprechen, bei dem der Zellenstrom gleichzeitig einem gleichgearteten zweiten GCRA zugeführt wird, **dadurch gekennzeichnet, dass** beide GCRA aufeinander synchronisiert werden, dass das Synchronisieren zu einem Zeitpunkt erfolgt, zu dem sich beide GCRA in einem Regenerationszustand befinden, dass im zu überprüfenden GCRA ein vereinbarter Parameter vorübergehend so verändert wird, dass nach beschränkter Zeit zwangsläufig ein Regenerationszustand des GCRA erreicht und in der Folge beibehalten wird, und der Parameter zum Zeitpunkt des Synchronisierens zurückgesetzt wird und dass die Konformitätsüberprüfung durch Vergleich der Ergebnisse der beiden GCRA nach dem Zeitpunkt des Synchronisierens erfolgt.

2.    Verfahren nach Anspruch 1, **dadurch gekennzeichnet, dass** zu einer den GCRA darstellenden Folge {y} von Ankunftszeitdifferenzen erster Ordnung eine mit extremen Anfangsbedingungen gestartete majorante Folge {d} gebildet und mit deren Hilfe das Erreichen eines Regenerationszustands ermittelt wird.

3.    Verfahren nach Anspruch 2, **dadurch gekennzeichnet, dass** die majorante Folge {d} zum oder nach dem Zeitpunkt des Veränderns des vereinbarten Parameters des zu überprüfenden GCRA gestartet wird und beim von der majoranten Folge {d} angezeigten Erreichen des Regenerationszustands der veränderte Parameter zurückgesetzt und gleichzeitig der zweite GCRA mit denselben Parametern wie jenen des zu überprüfenden GCRA gestartet wird.

4. Verfahren nach Anspruch 2, **dadurch gekennzeichnet, dass** der Wert eines der Parameter zur Bildung der majoranten Folge {d} sich vom nämlichen Parameter im zu überprüfenden GCRA derart unterscheidet, dass die majorante Folge {d} den Regenerationszustand geringfügig später erreicht.

5. Verfahren nach Anspruch 1, **dadurch gekennzeichnet, dass** während eines Beobachtungszeitraums nach dem Synchronisieren die Anzahl der zur virtuellen Verbindung gehörenden insgesamt angekommenen, nach dem ersten GCRA vorhandenen und vom zweiten GCRA verworfenen Datenzellen gezählt werden, die die. Anzahl der Zahl der insgesamt angekommenen abzüglich der vom zweiten GCRA verworfenen Datenzellen mit der Zahl der nach dem ersten GCRA vorhandenen Datenzellen verglichen wird und auf Grund des Ergebnisses des Vergleichs auf Konformität oder Nichtkonformität erkannt wird.

6. Verfahren nach Anspruch 5, **dadurch gekennzeichnet, dass** unmittelbar am Ausgang des ersten GCRA OAM-Zellen des Typs F4 eingefügt werden, der Beobachtungszeitraum durch deren zeitliches Auftreten bestimmt wird, die Information über die Zahl der zwischen zwei F4-Zellen gesendeten Datenzellen den F4-Zellen entnommen werden und an die Stelle der Zahl der nach dem ersten GCRA vorhandenen Datenzellen gesetzt wird.

7. Vorrichtung zur Durchführung des Verfahrens nach Anspruch 1 an einem Netzelement (2), das in einem Steuerteil (3) eine Implementierung eines zu überprüfenden GCRA enthält, mit einer Einfügeschaltung (16) und einer nachgeschalteten Verzweigung (10) in einer Leitung (1) für den Zellenstrom an einem Eingang (8) des Netzelements (2), **gekennzeichnet durch** eine Implementierung eines zweiten GCRA (14) und eine benachbarte Schaltung (13) zur Synchronisierung der GCRA, die derart an die Verzweigung (10) angeschlossen sind, dass der Unterschied der Laufzeiten einer Zelle von der Verzweigung (10) bis zu den beiden Implementierungen der GCRA (3, 14) weniger als eine Zellentransmissionszeit beträgt, eine Rückleitung (15) von der Schaltung (13) an die Einfügeschaltung (16) und einen mit der Schaltung (13), der Implementierung des zweiten GCRA (14) und mindestens einem Ausgang (9) des Netzelements (2) verbundenen Konformitätsentscheider (20).

8. Vorrichtung nach Anspruch 7, **dadurch gekennzeichnet, dass** der Konformitätsentscheider (20) eine Auswerteschaltung für F4-Zellen und einen Vergleichszähler enthält, der die zwischen der Einfügestelle der F4-Zellen im Netzelement (2) und dem Konformitätsentscheider (20) seit der Ankunft der letzten F4-Zelle verlorengegangenen Zellen ermittelt.

### Claims

1. Method for checking the conformity of a so-called GCRA algorithm for the discrimination of data cells of a virtual connection in a cell stream, which do not correspond to the agreed parameters governing the occurrence times of such data cells, in which the cell stream is simultaneously provided with an equivalent second GCRA, **characterised in that** the two GCRAs are synchronised with each other, **in that** the synchronisation is carried out at a time when both GCRAs are in a regeneration state, **in that** an agreed parameter in the GCRA to be checked is temporarily modified so that regeneration state of the GCRA is necessarily reached after a limited time and is subsequently maintained, and the parameter is reset at the synchronisation time, and **in that** the conformity check is carried out by comparing the results of the two GCRAs after the synchronisation time.

2. Method according to Claim 1, **characterised in that** a majorant sequence {d}, started with extreme initial conditions, is formed for a sequence {y} of first-order arrival-time differences representing the GCRA, and the reaching of a regeneration state is ascertained with the aid of it.

3. Method according to Claim 2, **characterised in that** the majorant sequence {d} is started at or after the modification time of the agreed parameter of the GCRA to be checked and, upon reaching the regeneration state as indicated by the majorant sequence {d}, the modified parameter is reset and the second GCRA is simultaneously started with the same parameters of those of the GCRA to be checked.

4. Method according to Claim 2, **characterised in that** the value of one of the parameters for forming the majorant sequence {d} differs from the said parameter in the GCRA to be checked, in such a way that the majorant sequence {d} reaches the regeneration state slightly later.

5. Method according to Claim 1, **characterised in that** during an observation time after the synchronisation, the total number of incoming data cells belonging to the virtual connection, which are present according to the first GCRA and are rejected by the second GCRA, are counted, the number of the total of incoming count of data cells less those rejected by the second GCRA is compared with the count of the data cells present according to the first GCRA, and conformity or nonconformity is deduced on the basis of the result of the comparison.

6. Method according to Claim 5, **characterised in that** OAM cells of the F4 type are inserted immediately at the output of the first GCRA, the observation period is determined by their occurrence times, the information about the count of the data cells transmitted between two F4 cells is taken from the F4 cells and put in the place of the count of the data cells present according to the first GCRA.

7. Device for carrying out the method according to Claim 1 on a network element (2), which contains an implementation of a GCRA to be checked in a control part (3), with an insertion circuit (16) and a downstream branch (10) in a line (1) for the cell stream to an input (8) of the network element (2), **characterised by** an implementation of a second GCRA (14) and a neighbouring circuit (13) for synchronisation of the GCRAs, which are connected to the branch (10) in such a way that the difference in the propagation times of a cell from the branch (10) to the two implementations of the GCRAs (3, 14) amounts to less than one cell-transmission time, a return line (15) from the circuit (13) to the insertion circuit (16), and a conformity decider (I) connected to the circuit (13), the implementation of the second GCRA (14) and at least one output (9) of the network element (2).

8. Device according to Claim 7, **characterised in that** the conformity decider (20) contains an evaluation circuit for F4 cells and a comparison counter, which determines the cells lost between the insertion position of the F4 cells in the network element (2) and the conformity decider (20) since the arrival of the last F4 cell.

**Revendications**

1. Procédé de vérification de conformité d'un algorithme appelé GCRA pour la discrimination de cellules de données d'une liaison virtuelle dans un flux de cellule qui ne correspondent pas aux paramètres convenus concernant l'arrivée temporelle de telles cellules de données, dans lequel le flux de cellule est entrée simultanément dans un deuxième GCRA du même type, **caractérisé en ce que** les deux GCRA sont synchronisés entre eux, **en ce que** la synchronisation est réalisé à un instant où les deux GCRA se trouvent dans un état de régénération, **en ce que**, dans le GCRA à vérifier, un paramètre convenu est modifié provisoirement de façon à ce qu'après un temps limité un état de régénération du GCRA soit obligatoirement atteint et respecté dans la suite et le paramètre est réajusté, et **en ce que** la vérification de conformité est réalisée par comparaison des résultats des deux GCRA après l'instant de synchronisation.

2. Procédé selon la revendication 1, **caractérisé en ce que**, à partir d'une suite (y) de différences de temps d'arrivée de premier ordre, représentant le GCRA, une suite majorante {d}, démarrée avec des conditions de départ extrêmes, est formée, à l'aide de laquelle l'état de régénération est détecté.

3. Procédé selon la revendication 2, **caractérisé en ce que** la suite majorante {d} est démarré à l'instant ou après l'instant de la modification du paramètre convenu du GCRA à vérifier, et lorsque la suite majorante {d} indique que l'état de régénération est atteint, le paramètre modifié est réajusté et le deuxième GCRA est démarré avec les mêmes paramètres que ceux du GCRA à vérifier.

4. Procédé selon la revendication 2, **caractérisé en ce que** la valeur d'un des paramètres, pour la formation de la suite majorante {d}, se différencie du paramètre nominal du GCRA à vérifier, de telle sorte que la suite majorante {d} atteigne l'état de régénération un peu plus tard.

5. Procédé selon la revendication 1, **caractérisé en ce que**, pendant un temps d'observation après la synchronisation, le nombre de cellules de données appartenant à la liaison virtuelle, présentes après le premier GCRA et rejetées par le deuxième GCRA, est compté et le nombre total des cellules arrivantes auquel est soustrait le nombre de cellules de données rejetées par le deuxième GCRA est comparé au nombre des cellules de données présentes après le premier GCRA et la conformité ou la non-conformité est déduite du résultat de la comparaison.

**6.** Procédé selon la revendication 5, **caractérisé en ce que**, directement à la sortie du premier GCRA, des cellules OAM du type F4 sont insérées, le temps d'observation est déterminé par leur apparition chronologique, l'information concernant le nombre des cellules de données envoyées entre deux cellules F4 est indiquée dans les cellules F4 et placée au lieu du nombre des cellules de données présentes après le premier GCRA.

**7.** Dispositif de réalisation du procédé de la revendication 1, sur un élément de réseau (2) qui comprend, dans une partie de contrôle (3), une mise en oeuvre du GCRA à vérifier, avec un circuit d'insertion (16) et un embranchement (10) disposé en aval sur une ligne (1) pour le flux de cellules au niveau d'une entrée (8) de l'élément de réseau (2), **caractérisé par** une mise en oeuvre d'un deuxième GCRA (14) et un circuit adjacent (13) pour la synchronisation des GCRA, qui sont raccordés à l'embranchement (10) de telle sorte que la différence des temps de propagation d'une cellule de l'embranchement (10) jusqu'aux deux mises en oeuvres des GCRA (3, 14) soit inférieure à un temps de transmission des cellules, une ligne de retour (15)du circuit (13) vers le circuit d'insertion (16) et un décideur de conformité (20) relié au circuit (13), à la mise en oeuvre du deuxième GCRA (14) et au moins une sortie (9) de l'élément de réseau (2).

**8.** Dispositif selon la revendication 7, **caractérisé en ce que** le décideur de conformité (20) comprend un circuit d'analyse pour des cellules F4 et un compteur de comparaison qui détermine les cellules perdues entre l'endroit d'insertion des cellules F4 de l'élément de réseau (2) et le décideur de conformité (20) depuis l'arrivée de la dernière cellule F4.

Fig. 1

Fig. 2